# FASCICULE DE BREVET EUROPEEN

(11) **EP 2 639 102 B1**
(45) Date de publication et mention de la délivrance du brevet: **12.08.2015**
(21) Numéro de dépôt: 13158203.3
(22) Date de dépôt: 07.03.2013
(51) Int. Cl.: B60N 2/48

(54) **Appui-tête de siège de véhicule automobile**
Kopfstütze für Kraftfahrzeugsitz
Headrest for an automobile seat

(30) Priorité: 13.03.2012 FR 1252264
(43) Date de publication de la demande: 18.09.2013
(73) Titulaire: CENTRE D'ETUDE ET DE RECHERCHE POUR L'AUTOMOBILE (CERA), 51100 Reims (FR)
(72) Inventeur: Brice, Patrick, 54110 Hudiviller (FR); Georges, Laurent, 08190 Roizy (FR); Carpentier, Alain, 51390 Gueux (FR); Patte, Damien, 51490 EPOYE (FR)
(74) Mandataire: Sayettat, Julien Christian

(56) Documents cités:
- EP-A1- 1 580 067
- WO-A1-2009/020439
- DE-A1- 3 339 361
- DE-C1- 10 215 058
- US-A- 5 180 207

## Description

L'invention concerne un appui-tête de siège de véhicule automobile.

Il est connu, notamment des documents WO-2009/020439 et DE-33 39 361, de réaliser un appui-tête de siège de véhicule automobile, ledit appui-tête comprenant :
- une première structure de support d'un premier coussin d'appui,
- une deuxième structure de support d'un deuxième coussin d'appui,
- un dispositif de réglage angulaire desdites structures l'une par rapport à l'autre.

Selon une réalisation, la première structure supporte un premier coussin d'appui de l'arrière de la tête du passager, la deuxième structure étant disposée latéralement par rapport à ladite première structure de manière à supporter un coussin d'appui latéral articulé.

Selon une autre réalisation, la première structure supporte un premier coussin d'appui de l'arrière de la tête du passager, la deuxième structure étant disposée en bas de ladite première structure de manière à supporter un coussin d'appui nuque articulé.

Dans ces réalisations, il est courant de prévoir que le dispositif de réglage comprenne une pince métallique enserrant une partie cylindrique métallique de la première structure, le maintien de la deuxième structure dans la position angulaire choisie se faisant par la friction s'exerçant entre ladite pince et ladite partie cylindrique.

La pince peut notamment être maintenue en position resserrée par une vis et un écrou.

D'autre part, il est nécessaire de pourvoir la première structure, réalisée notamment par moulage de matériau plastique, d'au moins une tige métallique, formant la partie cylindrique, autour de laquelle est disposée la pince en friction. On le voit, les réalisations connues requièrent une multiplicité de composants, ce qui complexifie la réalisation de l'appui-tête.

En outre, dans un tel agencement, on peut, notamment du fait des dispersions dimensionnelles pouvant exister au niveau de la pince ou de la partie cylindrique - ou du fait d'une usure au fil du temps -, observer un couple de friction variable d'un appui-tête à l'autre d'une même série.

Et dans certains cas, le couple de friction peut s'avérer insuffisant pour assurer un bon maintien angulaire de la deuxième structure.

Il en résulte que l'usager ne peut utiliser le deuxième coussin d'appui qui se dérobe sous le poids de sa tête ou de sa nuque.

L'invention a pour but de pallier ces inconvénients.

A cet effet, l'invention propose un appui-tête de siège de véhicule automobile, ledit appui-tête comprenant :
- une première structure de support d'un premier coussin d'appui,
- une deuxième structure de support d'un deuxième coussin d'appui,
- un dispositif de réglage angulaire desdites structures l'une par rapport à l'autre autour d'un axe de rotation,
ledit dispositif de réglage angulaire comprenant une pince déformable depuis une configuration de crantage resserrée vers une configuration de transition desserrée, ladite pince présentant les caractéristiques suivantes :
- elle est à base d'une lame repliée en métal à ressort,
- elle comprend deux branches reliées l'une à l'autre par une partie médiane, chacune desdites branches comprenant un secteur de crantage respectif comprenant une pluralité de crans successifs obtenus par pliage, chacun desdits secteurs s'inscrivant de façon générale dans un arc de cercle respectif, lesdits arcs de cercle s'inscrivant dans un cercle d'axe de révolution confondu avec ledit axe de rotation, de sorte qu'à un cran donné d'un secteur corresponde un cran diamétralement opposé de l'autre secteur, deux crans opposés définissant une position crantée de réglage angulaire,
- elle est montée de manière fixe sur ladite première structure,
ledit dispositif de réglage angulaire comprenant en outre deux excroissances de crantage issues de ladite deuxième structure, lesdites excroissances étant disposées de part et d'autre d'un diamètre dudit cercle de manière à pouvoir s'engager dans deux crans diamétralement opposés de ladite pince en configuration resserrée, le passage d'une position angulaire à l'autre réalisant une déformation de ladite pince vers sa configuration desserrée à l'encontre d'une force de rappel élastique la rappelant vers sa configuration resserrée.

Dans cette description, les termes de positionnement dans l'espace (latéral, arrière, bas, horizontal,...) sont pris en référence à l'appui-tête disposé dans le véhicule.

Avec l'agencement proposé, la deuxième structure est fermement maintenue en place dans la position de réglage choisie, les excroissances s'engageant dans les crans qui leur font face lorsque l'on est en position crantée de réglage angulaire, le passage à une autre position requérant un couple de rotation suffisant pour vaincre la force à appliquer pour amener la pince en configuration desserrée.

Par ailleurs, l'effort à fournir pour passer d'une position angulaire à l'autre est sensiblement répétable d'un appui-tête à l'autre d'une même série, puisque les dispersions dimensionnelles n'ont qu'un faible impact sur l'effort à fournir pour réaliser la rotation, cet effort étant principalement conditionné par l'élasticité de la pince, sachant qu'il est aisé de réaliser des pinces de coefficient d'élasticité répétable.

En outre, on supprime l'utilisation d'éléments tels que vis, écrou et tige mis en oeuvre dans les réalisations de l'art antérieur.

D'autres particularités et avantages de l'invention apparaîtront dans la description qui suit, faite en référence aux figures jointes, dans lesquelles :

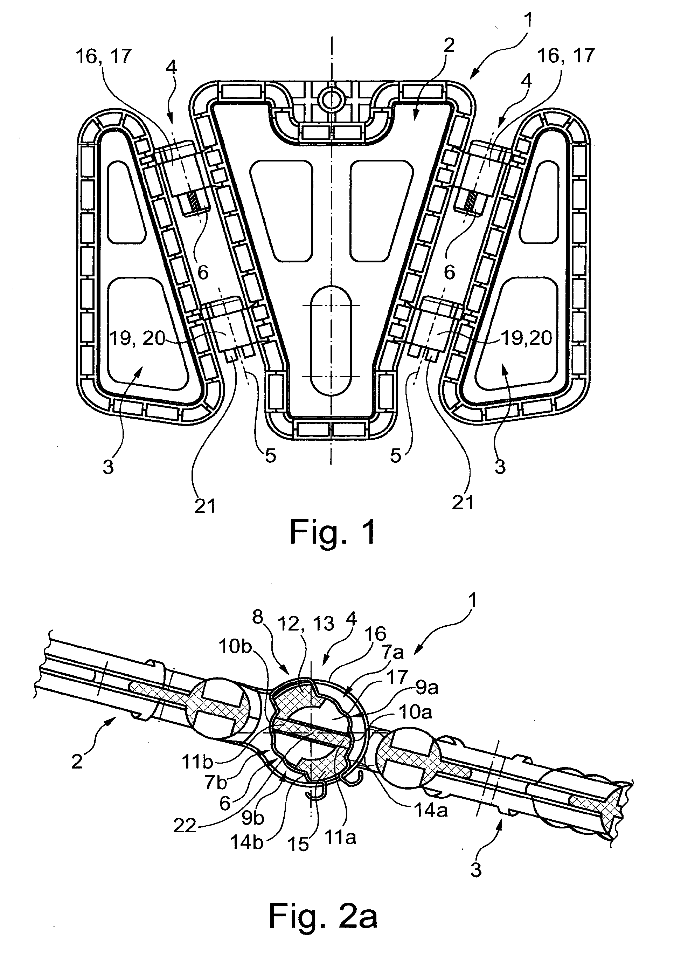

- la figure 1 est une vue de face partielle d'un appui-tête selon une réalisation, ledit appui-tête étant pourvu d'une paire de deuxièmes structures latérales disposées selon une première position extrême de réglage angulaire,

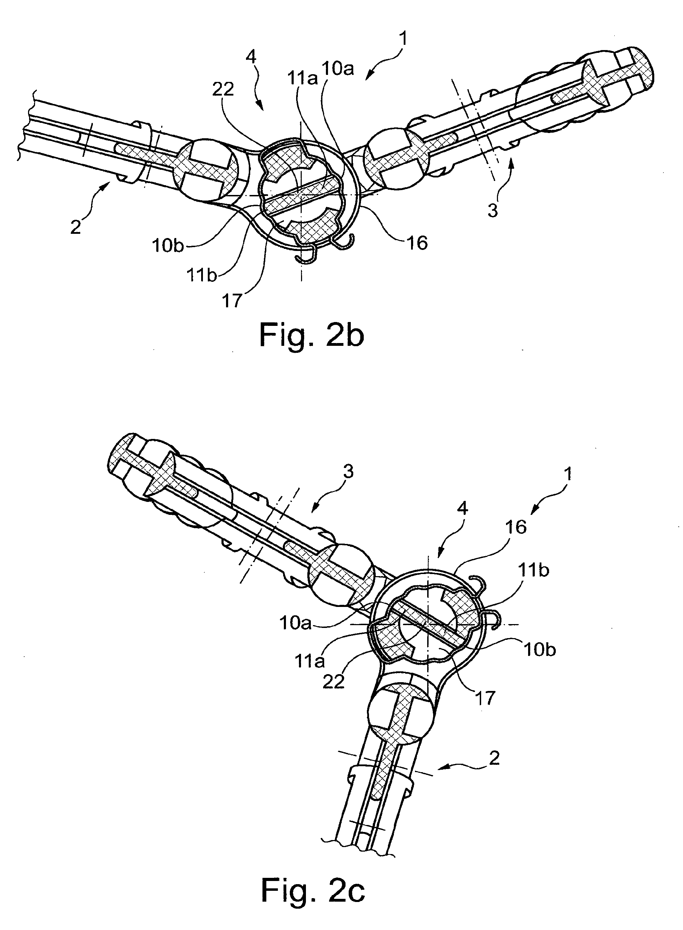

- les figures 2 sont des vues en coupe selon un plan horizontal de l'appui-tête de la figure 1, les structures latérales étant disposées selon la première position extrême (2a), une position angulaire intermédiaire (2b) et une troisième position extrême (2c),

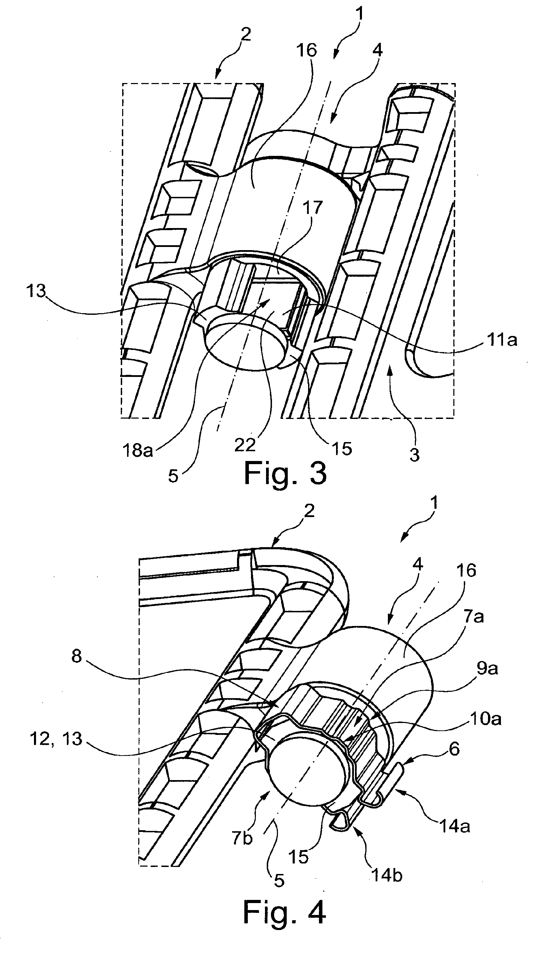

- la figure 3 est une vue en perspective partielle agrandie de l'appui-tête de la figure 1, la pince étant retirée,
- la figure 4 est une vue en perspective partielle agrandie de la première structure de la figure 1, la pince étant en place.

En référence aux figures, on décrit un appui-tête 1 de siège de véhicule automobile, ledit appui-tête comprenant :
- une première structure 2 de support d'un premier coussin d'appui, non représenté,
- une deuxième structure 3 de support d'un deuxième coussin d'appui, non représenté,
- un dispositif 4 de réglage angulaire desdites structures l'une par rapport à l'autre autour d'un axe de rotation 5,
ledit dispositif de réglage angulaire comprenant une pince 6 déformable depuis une configuration de crantage resserrée vers une configuration de transition desserrée, ladite pince présentant les caractéristiques suivantes :
- elle est à base d'une lame repliée en métal à ressort,
- elle comprend deux branches 7a,7b reliées l'une à l'autre par une partie médiane 8, chacune desdites branches comprenant un secteur 9a,9b de crantage respectif comprenant une pluralité de crans 10a,10b successifs - ici trois crans - obtenus par pliage, chacun desdits secteurs s'inscrivant de façon générale dans un arc de cercle respectif, lesdits arcs de cercle s'inscrivant dans un cercle d'axe de révolution confondu avec ledit axe de rotation, de sorte qu'à un cran 10a donné d'un secteur 9a corresponde un cran 10b diamétralement opposé de l'autre secteur 9b, deux crans 10a,10b opposés définissant une position crantée de réglage angulaire,
- elle est montée de manière fixe sur ladite première structure.

Le dispositif de réglage angulaire 4 comprenant en outre deux excroissances 11a, 11b de crantage issues de ladite deuxième structure, lesdites excroissances étant disposées de part et d'autre d'un diamètre dudit cercle de manière à pouvoir s'engager dans deux crans 10a,10b diamétralement opposés de ladite pince en configuration resserrée, le passage d'une position angulaire à l'autre réalisant une déformation de ladite pince vers sa configuration desserrée à l'encontre d'une force de rappel élastique la rappelant vers sa configuration resserrée.

Selon la réalisation représentée, la pince 6 est emboitée sur la première structure 2, sa partie médiane 8 comprenant un renfoncement 12 dans lequel est logée une première saillie 13 issue de ladite première structure, de manière à solidariser en rotation ladite pince et ladite structure.

Selon la réalisation représentée, les parties extrêmes 14a,14b libres des branches 7a,7b sont en appui sur une deuxième saillie 15 issue de la première structure 2, de manière à renforcer la solidarisation en rotation entre la pince 6 et ladite structure.

Selon la réalisation représentée, la première structure 2 comprend un manchon principal 16, ici issu de moulage, ledit manchon ayant pour axe de symétrie l'axe de rotation 5, la deuxième structure 3 comprenant un doigt principal 17 inséré dans ledit manchon de façon à former une charnière principale, l'extrémité libre dudit doigt étant en forme de plaque 22, la pince 6 étant emboitée autour dudit manchon en regard de ladite plaque, deux ouvertures 18a étant prévues dans ledit manchon pour permettre une coopération entre les crans 10a,10b des secteurs 9a,9b de crantage et deux bords de ladite plaque formant excroissances de crantage 11a,11b.

Selon la réalisation représentée, la première structure 2 comprend un manchon annexe 19, ici issu de moulage, disposé à distance du manchon principal 16, ledit manchon annexe ayant pour axe de symétrie l'axe de rotation 5, la deuxième structure 3 comprenant un doigt annexe 20 inséré dans ledit manchon annexe de façon à former une charnière annexe.

Les manchons 16,19 et doigts 17,20 sont ici issus de matière des structures 2,3 réalisées par moulage de matériau plastique, ce qui minimise le nombre de composants de l'appui-tête 1.

Selon la réalisation représentée, l'extrémité libre du doigt annexe 20 est pourvue d'un harpon 21 agencé pour empêcher un retrait dudit doigt annexe du manchon annexe 19.

Selon la réalisation représentée, la première structure 2 supporte un premier coussin, non représenté, d'appui de l'arrière de la tête du passager, la deuxième structure 3 étant disposée latéralement par rapport à ladite première structure de manière à supporter un coussin, non représenté, d'appui latéral articulé.

Selon une variante non représentée, la première structure 2 supporte un premier coussin d'appui de l'arrière de la tête du passager, non représenté, la deuxième structure 3 étant disposée en bas de ladite première structure de manière à supporter un coussin, non représenté, d'appui nuque articulé.

## Revendications

1. Appui-tête (1) de siège de véhicule automobile, ledit appui-tête comprenant :
• une première structure (2) de support d'un premier coussin d'appui,
• une deuxième structure (3) de support d'un deuxième coussin d'appui,
• un dispositif (4) de réglage angulaire desdites structures l'une par rapport à l'autre autour d'un axe de rotation (5),
ledit appui-tête étant **caractérisé en ce que** ledit dispositif de réglage angulaire comprend une pince (6) déformable depuis une configuration de crantage resserrée vers une configuration de transition desserrée, ladite pince présentant les caractéristiques suivantes :
• elle est à base d'une lame repliée en métal à ressort,
• elle comprend deux branches (7a,7b) reliées l'une à l'autre par une partie médiane (8), chacune desdites branches comprenant un secteur (9a,9b) de crantage respectif comprenant une pluralité de crans (10a,10b) successifs obtenus par pliage, chacun desdits secteurs s'inscrivant de façon générale dans un arc de cercle respectif, lesdits arcs de cercle s'inscrivant dans un cercle d'axe de révolution confondu avec ledit axe de rotation, de sorte qu'à un cran (10a) donné d'un secteur (9a) corresponde un cran (10b) diamétralement opposé de l'autre secteur (9b), deux crans (10a,10b) opposés définissant une position crantée de réglage angulaire,
• elle est montée de manière fixe sur ladite première structure,
ledit dispositif de réglage angulaire comprenant en outre deux excroissances (11a, 11b) de crantage issues de ladite deuxième structure, lesdites excroissances étant disposées de part et d'autre d'un diamètre dudit cercle de manière à pouvoir s'engager dans deux crans (10a,10b) diamétralement opposés de ladite pince en configuration resserrée, le passage d'une position angulaire à l'autre réalisant une déformation de ladite pince vers sa configuration desserrée à l'encontre d'une force de rappel élastique la rappelant vers sa configuration resserrée.

2. Appui-tête selon la revendication 1, **caractérisé en ce que** la pince (6) est emboitée sur la première structure (2), sa partie médiane (8) comprenant un renfoncement (12) dans lequel est logée une première saillie (13) issue de ladite première structure, de manière à solidariser en rotation ladite pince et ladite structure.

3. Appui-tête selon la revendication 2, **caractérisé en ce que** les parties extrêmes (14a,14b) libres des branches (7a,7b) sont en appui sur une deuxième saillie (15) issue de la première structure (2), de manière à renforcer la solidarisation en rotation entre la pince (6) et ladite structure.

4. Appui-tête selon l'une quelconque des revendications 1 à 3, **caractérisé en ce que** la première structure (2) comprend un manchon principal (16), ledit manchon ayant pour axe de symétrie l'axe de rotation (5), la deuxième structure (3) comprenant un doigt principal (17) inséré dans ledit manchon de façon à former une charnière principale, l'extrémité libre dudit doigt étant en forme de plaque (22), la pince (6) étant emboitée autour dudit manchon en regard de ladite plaque, deux ouvertures (18a) étant prévues dans ledit manchon pour permettre une coopération entre les crans (10a,10b) des secteurs (9a,9b) de crantage et deux bords de ladite plaque formant excroissances (11a,11b) de crantage.

5. Appui-tête selon la revendication 4, **caractérisé en ce que** la première structure (2) comprend un manchon annexe (19) disposé à distance du manchon principal (16), ledit manchon annexe ayant pour axe de symétrie l'axe de rotation (5), la deuxième structure (3) comprenant un doigt annexe (20) inséré dans ledit manchon annexe de façon à former une charnière annexe.

6. Appui-tête selon la revendication 5, **caractérisé en ce que** l'extrémité libre du doigt annexe (20) est pourvue d'un harpon (21) agencé pour empêcher un retrait dudit doigt annexe du manchon annexe (19).

7. Appui-tête selon l'une quelconque des revendications 1 à 6, **caractérisé en ce que** la première structure (2) supporte un premier coussin d'appui de l'arrière de la tête du passager, la deuxième structure (3) étant disposée latéralement par rapport à ladite première structure de manière à supporter un coussin d'appui latéral articulé.

8. Appui-tête selon l'une quelconque des revendications 1 à 6, **caractérisé en ce que** la première structure (2) supporte un premier coussin d'appui de l'arrière de la tête du passager, la deuxième structure (3) étant disposée en bas de ladite première structure de manière à supporter un coussin d'appui nuque articulé.

## Patentansprüche

1. Kopfstütze (1) eines Kraftfahrzeugsitzes, wobei die Kopfstütze Folgendes umfasst:
- eine erste Tragstruktur (2) eines ersten Stützkissens,
- eine zweite Tragstruktur (3) eines zweiten Stützkissens,
- eine Winkeleinstellvorrichtung (4) der Strukturen zueinander um eine Rotationsachse (5),
Kopfstütze **dadurch gekennzeichnet, dass** die Winkeleinstellvorrichtung eine Zange (6) umfasst, die ausgehend von einer gespannten Einrastkonfiguration zu einer gelockerten Übergangskonfiguration verformbar ist, wobei die Zange die folgenden Merkmale aufweist:
- sie basiert auf einem gefalteten Blatt aus Federmetall,
- sie umfasst zwei Schenkel (7a, 7b), die miteinander durch einen Mittenteil (8) verbunden sind, wobei jeder der Schenkel einen jeweiligen Einrastsektor (9a, 9b) umfasst, der mehrere aufeinanderfolgende Rasten (10a, 10b) umfasst, die durch Falten erzielt werden, wobei jeder der Sektoren im Allgemeinen in einen jeweiligen Kreisbogen fällt, wobei die Kreisbögen in einen Kreis fallen, dessen Drehachse mit der Rotationsachse zusammenfällt, so dass eine gegebene Raste (10a) eines Sektors (9a) einer diametral gegenüberliegenden Raste (10b) des anderen Sektors (9b) entspricht, wobei zwei gegenüberliegende Rasten (10a, 10b) eine Einrastposition zur Winkeleinstellung definieren,
- sie ist stationär auf die erste Struktur montiert, wobei die Winkeleinstellvorrichtung außerdem zwei Einrastausstülpungen (11a, 11b) umfasst, die aus der zweiten Struktur hervorgehen, wobei die Ausstülpungen zu beiden Seiten eines Durchmessers des Kreises derart angeordnet sind, dass sie in zwei diametral gegenüberliegende Rasten (10a, 10b) der Zange in gespannter Konfiguration eingreifen können, wobei der Übergang von einer Winkelposition zur anderen eine Verformung der Zange zu ihrer gelockerten Konfiguration gegen eine elastische Rückstellkraft, die sie zu ihrer gespannten Konfiguration zurückstellt, verwirklicht.

2. Kopfstütze nach Anspruch 1, **dadurch gekennzeichnet, dass** die Zange (6) auf der ersten Struktur (2) eingeklinkt ist, wobei ihr Mittenteil (8) eine Vertiefung (12) umfasst, in der ein erster Vorsprung (13), der aus der ersten Struktur stammt, derart aufgenommen ist, dass die Zange und die Struktur in Drehung fest verbunden sind.

3. Kopfstütze nach Anspruch 2, **dadurch gekennzeichnet, dass** die freien Endteile (14a, 14b) der Schenkel (7a, 7b) auf einem zweiten Vorsprung (15), der aus der ersten Struktur (2) hervorgeht, derart in Auflage sind, dass die feste Verbindung in Drehung zwischen der Zange (6) und der Struktur verstärkt ist.

4. Kopfstütze nach einem der Ansprüche 1 bis 3, **dadurch gekennzeichnet, dass** die erste Struktur (2) einen Hauptstutzen (16) umfasst, wobei der Stutzen die Rotationsachse (5) als Symmetrieachse hat, wobei die zweite Struktur (3) einen Hauptfinger (17) umfasst, der in den Stutzen derart eingefügt ist, dass ein Hauptscharnier gebildet wird, wobei das freie Ende des Fingers Plattenform (22) hat, wobei die Zange (6) um den Stutzen gegenüber der Platte eingeklinkt ist, wobei zwei Öffnungen (18a) in dem Stutzen vorgesehen sind, um ein Zusammenwirken zwischen den Rasten (10a, 10b) der Einrastsektoren (9a, 9b) und zwei Rändern der Platte, die Einrastausstülpungen (11a, 11b) bilden, zu erlauben.

5. Kopfstütze nach Anspruch 4, **dadurch gekennzeichnet, dass** die erste Struktur (2) einen Nebenstutzen (19) umfasst, der in Entfernung von dem Hauptstutzen (16) angeordnet ist, wobei der Nebenstutzen die Rotationsachse (5) als Symmetrieachse hat, wobei die zweite Struktur (3) einen Nebenfinger (20) umfasst, der in den Nebenstutzen derart eingefügt ist, dass ein Nebenscharnier gebildet wird.

6. Kopfstütze nach Anspruch 5, **dadurch gekennzeichnet, dass** das freie Ende des Nebenfingers (20) mit einem Fanghaken (21) versehen ist, der eingerichtet ist, um ein Zurückziehen des Nebenfingers des Nebenstutzens (19) zu verhindern.

7. Kopfstütze nach einem der Ansprüche 1 bis 6, **dadurch gekennzeichnet, dass** die erste Struktur (2) ein erstes Stützkissen des Hinterkopfs des Insassen trägt, wobei die zweite Struktur (3) seitlich in Bezug auf die erste Struktur derart angeordnet ist, dass ein angelenktes seitliches Stützkissen getragen wird.

8. Kopfstütze nach einem der Ansprüche 1 bis 6, **dadurch gekennzeichnet, dass** die erste Struktur (2) ein erstes Stützkissen des Hinterkopfs des Insassen stützt, wobei die zweite Struktur (3) unter der ersten Struktur derart angeordnet ist, dass ein angelenktes Nackenstützkissen getragen wird.

## Claims

1. Headrest (1) of a motor vehicle seat, said headrest comprising:
- a first structure (2) for supporting a first support cushion,
- a second structure (3) for supporting a second support cushion,
- a device (4) for angular adjustment of said structures relative to each other about an axis of rotation (5), said headrest being **characterised in that** said angular adjustment device comprises a clamp (6) deformable from a tightened latching configuration to a loose transition configuration, said clamp having the following
characteristics:
- it is made of a folded strip of spring metal,
- it comprises two branches (7a, 7b) connected to one another by a central part (8), each of said branches comprising a sector (9a, 9b) of respective latching comprising a plurality of successive notches (10a, 10b) obtained by folding, each of said sectors registering generally in a respective circular arc, said circular arcs forming part of a circle of axis of revolution coincident with said axis of rotation, in such a way that a given notch (10a) of a sector (9a) corresponds to a notch (10b) diametrically opposite of the other sector (9b), two opposite notches (10a, 10b) defining a latched position of angular adjustment,
- it is fixedly mounted on said first structure, said angular adjustment device further comprising two latching protrusions (11a, 11b) stemming from said second structure, said projections being disposed on either side of a diameter of said circle so as to be able to engage in two notches (10a, 10b) diametrically opposed to said clamp in tightened configuration, the transition from one angular position to the other making a deformation of said clamp toward its loose configuration against an elastic return force returning it towards its tightened configuration.

2. Headrest according to claim 1, **characterised in that** the clamp (6) is nested onto the first structure (2), its central portion (8) comprising a recess (12) in which is housed a first projection (13) stemming from said first structure, so as to secure in rotation said clamp and said structure.

3. Headrest according to claim 2, **characterised in that** the free end portions (14a, 14b) of the branches (7a, 7b) are bearing against a second projection (15) stemming from the first structure (2), so as to strengthen the attaching in rotation between the clamp (6) and said structure.

4. Headrest according to any one of claims 1 to 3, **characterised in that** the first structure (2) comprises a main sleeve (16), said sleeve having as its axis of symmetry the axis of rotation (5), the second structure (3) comprising a main finger (17) inserted in said sleeve so as to form a main hinge, the free end of said finger being in the form of a plate (22), the clamp (6) being nested around said sleeve opposite said plate, two openings (18a) being provided within said sleeve to enable cooperation between the notches (10a, 10b) of the lachting sectors (9a, 9b) and two edges of said plate forming latching protrusions (11a, 11b).

5. Headrest according to claim 4, **characterised in that** the first structure (2) comprises an auxiliary sleeve (19) disposed remotely from the main sleeve (16), said auxiliary sleeve having for axis of symmetry the axis of rotation (5), with the second structure (3) comprising an auxiliary finger (20) inserted into said auxiliary sleeve in such a way as to form an auxiliary hinge.

6. Headrest according to claim 5, **characterised in that** the free end of the auxiliary finger (20) is provided with a harpoon (21) arranged to prevent removal of said auxiliary finger from the auxiliary sleeve (19).

7. Headrest according to any one of claims 1 to 6, **characterised in that** the first structure (2) supports a first support cushion of the rear of the passenger's head, the second structure (3) being disposed laterally with respect to said first structure so as to support a hinged lateral support cushion.

8. Headrest according to any one of claims 1 to 6, **characterised in that** the first structure (2) supports a first support cushion of the rear of the head of the passenger, the second structure (3) being arranged at the bottom of said first structure in such a way as to support a hinged support cushion for the back of the neck.
